# FASCICULE DE BREVET EUROPEEN

(11) **EP 0 892 481 B1**
(45) Date de publication et mention de la délivrance du brevet: **06.10.2004**
(21) Numéro de dépôt: 97112022.5
(22) Date de dépôt: 15.07.1997
(51) Int. Cl.: H02K 3/52, H02K 15/00, H02K 11/00, H01F 41/10, G04C 13/11

(54) **Bobine de moteur pour pièce d'horlogerie**
Spule für Motoren für Zeitwerke
Coil for an electric timepiece

(43) Date de publication de la demande: 20.01.1999
(73) Titulaire: ETA SA Manufacture Horlogère Suisse, 2540 Grenchen (CH)
(72) Inventeur: Bettelini, Marco, 2515 Prêles (CH)
(74) Mandataire: Barbeaux, Bernard

(56) Documents cités:
- EP-A- 0 582 714
- GB-A- 2 012 117
- US-A- 5 531 390
- PATENT ABSTRACTS OF JAPAN vol. 005, no. 015 (E-043), 29 janvier 1981 & JP 55 144740 A (CITIZEN WATCH CO LTD), 11 novembre 1980,
- PATENT ABSTRACTS OF JAPAN vol. 004, no. 121 (E-023), 27 août 1980 & JP 55 077342 A (CITIZEN WATCH CO LTD), 11 juin 1980,

## Description

La présente invention est relative à une bobine de moteur actionnant l'affichage d'une pièce d'horlogerie, cette bobine comportant un noyau magnétisable dont chacune des extrémités comprend une oreille, un corps de bobine isolant constitué d'un tube entourant le noyau et d'un flasque disposé à chacune des extrémités du tube, et un enroulement bobiné sur le corps de bobine.

Une bobine dont la facture ressemble d'assez près à ce qui vient d'être décrit est montrée dans la demande de brevet JP 55077342. Dans ce document on trouve aussi un noyau pourvu de deux oreilles, deux flasques retenant l'enroulement et un film isolant entourant le noyau. Sur une des oreilles est apposé un circuit imprimé à deux pistes recevant chacune un fil de sortie de l'enroulement de la bobine. La bobine et l'endroit où les fils sont connectés au circuit sont recouverts d'un enduit de protection. Il n'est pas clairement dit comment ces connexions sont réalisées. On peut penser cependant que les fils sont soudés à l'étain sur les pistes du circuit imprimé selon le procédé courant. Quoiqu'il en soit, la connexion des fils de sortie de l'enroulement au reste du circuit pose toujours des problèmes de réalisation. Il faut savoir en effet que le fil d'enroulement est extrêmement fin puisque des diamètres de l'ordre de 20 µm sont couramment utilisés. Un fil d'une telle finesse est difficile à manipuler, très fragile et sujet à de fréquentes casses qui conduisent au rebut de la bobine. De plus, si la soudure se fait à l'étain, se pose aussi le problème du dénudage du fil, ce qui accroît encore les risques de casse. Se pose aussi la question du contrôle de la bienfacture de l'enroulement après bobinage par mesure de la résistance électrique. La plupart du temps ce contrôle a lieu après l'opération de soudage des fils sur les pistes du circuit, opération qui pourrait être évitée si le contrôle a lieu directement sur les fils de sortie avant soudage.

Dans le but d'éviter la manipulation des fils de sortie, de permettre le contrôle de l'enroulement avant connexion au reste du circuit, et d'éviter la casse du fil, la présente invention est remarquable en ce qu'une plaque, faite d'une pièce avec l'un des flasques et arrangée pour venir reposer sur l'une des oreilles du noyau sert de point d'ancrage pour les fils de sortie de l'enroulement par incrustation des zones terminales de chacun de ces fils dans la plaque. Cette façon de faire permet alors de mettre en oeuvre divers procédés qui seront expliqués plus bas pour faciliter le contrôle et le soudage des fils de sortie.

On va maintenant décrire en détail la présente invention sur la base d'une forme d'exécution donnée en exemple et illustrée par des dessins parmi lesquels :
- la figure 1 montre le noyau de la bobine avec deux oreilles;
- la figure 2 montre le corps de bobine équipé de deux flasques et d'une plaque faisant partie d'un des flasques;
- la figure 3 montre la bobine terminée avec son enroulement, ses fils de sortie étant incrustés dans la plaque;
- la figure 4 est une coupe partielle de la bobine montrant comment on s'y prend pour la contrôler;
- la figure 5 est un agrandissement de la région V de la figure 4;
- la figure 6 montre un circuit imprimé attaché à la bobine ainsi que la manière de faire pour souder les fils de sortie de l'enroulement aux pistes du circuit;
- la figure 7 est une vue de dessus de ce qui est représenté en perspective à la figure 6;
- la figure 8 est une coupe selon la ligne VIII-VIII représentée en figure 7;
- la figure 9 est un agrandissement de la région IX de la figure 8;
- la figure 10 est une vue de dessous de l'ensemble montré en figure 6, le circuit imprimé n'étant pas encore fixé à la plaque, et
- la figure 11 est une vue similaire à celle de la figure 10 dans laquelle le circuit imprimé est fixé à la plaque.

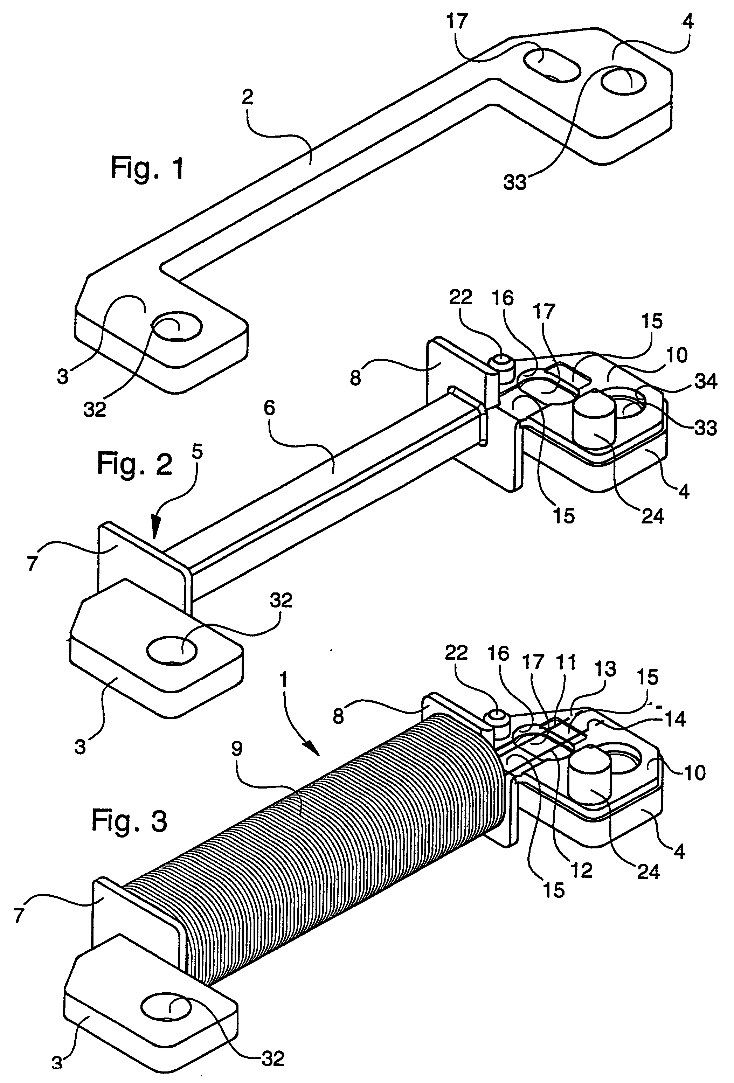

La manière de confectionner la bobine 1 selon l'invention est illustrée sur les figures 1 à 3. Cette bobine comprend d'abord un noyau magnétisable 2 dont l'extrémité gauche comporte une oreille 3 et l'extrémité droite une oreille 4 comme cela est apparent en figure 1. L'oreille 3 est pourvue d'un percement 32 et l'oreille 4 d'un percement 33. Ces percements 32 et 33 permettent de fixer au noyau le stator du moteur, ce stator se composant, comme cela est connu de pièces polaires entourant le rotor du moteur. Comme on le voit en figure 2, le noyau 2 est entouré par un corps de bobine 5 fait en matériau isolant et comprenant un tube 6 et deux flasques 7 et 8 disposés respectivement à l'extrémité du tube 6. Comme le montre la figure 3 un enroulement de fil 9 est bobiné sur le corps de bobine 5. Les fils de sortie de cet enroulement sont représentés sur la figure 3 et référencés par les chiffres 11 et 12.

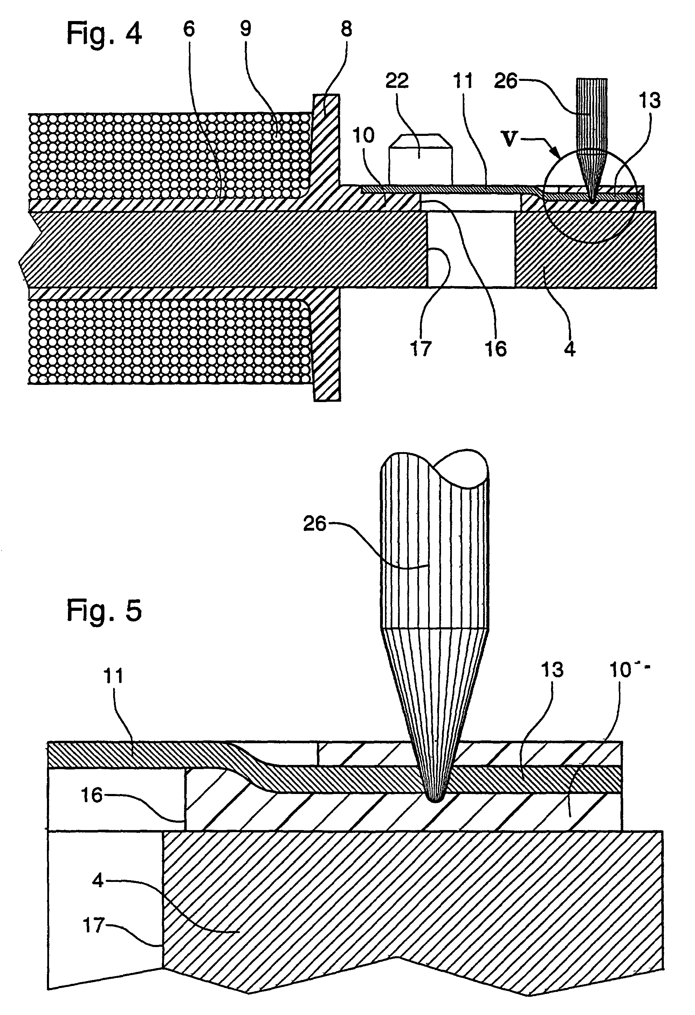

Selon l'invention et comme on le voit bien en figure 2, l'un des flasques 8 du corps de bobine comporte une plaque 10 faite d'une pièce avec le flasque 8. Cette plaque est arrangée pour venir reposer sur l'oreille 4 du noyau 2. On comprendra que le tube 6, les flasques 7 et 8 et la plaque 10 peuvent être moulés en une seule opération respectivement autour du noyau 2 et sur l'oreille 4. On indiquera en passant que la matière utilisée pour ce moulage peut être du Lucryl KR 2013 (marque déposée) de l'entreprise BASF. Comme cela est représenté en figure 3, le flasque 10 sert de point d'ancrage pour les fils de sortie 11 et 12 de l'enroulement 9. En effet, comme le montre la même figure 3, les fils 11 et 12 sont ancrés dans la plaque 10 par incrustation de leur zone terminale 13 et 14. Cette incrustation, vue en coupe à la figure 5, peut être faite de différentes manières, par exemple par échauffement local de la plaque 10 au moyen d'une thermotrode, ce qui permet l'enfoncement des fils 11 et 12 dans la matière dont est faite la plaque. Comme il est prévu de réaliser le bobinage sur machine automatique, la même machine pourra être chargée desdites incrustations. La zone terminale 13 du fil de sortie 11 est d'abord incrustée dans la plaque 10. Le fil est alors amené au travers du flasque 8, sur le noyau 6, puis bobiné sur ce noyau. Une fois le bobinage terminé, le fil de sortie 12 est amené, au travers du flasque 8, à sa zone d'ancrage 14 où il est incrusté dans la plaque 10.

A ce stade, on peut procéder au contrôle de bienfacture de la bobine, ce contrôle étant représenté sur la figure 4 qui montre en coupe partielle l'extrémité de la bobine équipée de la plaque 10, et sur la figure 5 qui présente un agrandissement de la zone V dessinée en figure 4. Pour ce contrôle, on applique dans la zone terminale 13 du fil de sortie 11 une sonde de mesure 26 qui entaille localement la plaque 10 puis vient en contact avec le fil 11. On procède de la même façon avec le fil de sortie 12 auquel on applique une autre sonde 26 (non représentée). On mesure alors la résistance électrique de l'enroulement entre les deux sondes 26. Cette façon de faire évite de devoir dénuder les fils avec les inconvénients et risques inhérents liés à cette opération. Elle permet aussi un contrôle immédiat de la bobine seule à sa sortie de fabrication et avant que celle-ci ne soit associée au reste du circuit.

On peut envisager différentes solutions pour connecter les fils de sorties 11 et 12 au circuit électrique de commande du moteur. Selon une particularité originale de l'invention, la figure 3 montre qu'avant d'aboutir aux zones terminales 13 et 14 d'incrustation, les fils de sortie 11 et 12 suivent un canal 15 (voir aussi la figure 2) pratiqué dans la plaque 10. Deux trous concentriques, l'un 16 percé dans la plaque 10 et l'autre 17 percé dans l'oreille 4, sont disposés perpendiculairement aux fils 11 et 12 et aboutissent dans le canal 15. Cette disposition définit ainsi une zone où les fils de sortie 11 et 12 sont accessibles de toute part et où ils peuvent donc être connectés au circuit électrique.

Selon une autre particularité originale de la présente invention, les connexions des fils de sortie 11 et 12 au circuit électrique sont réalisées de la façon suivante.

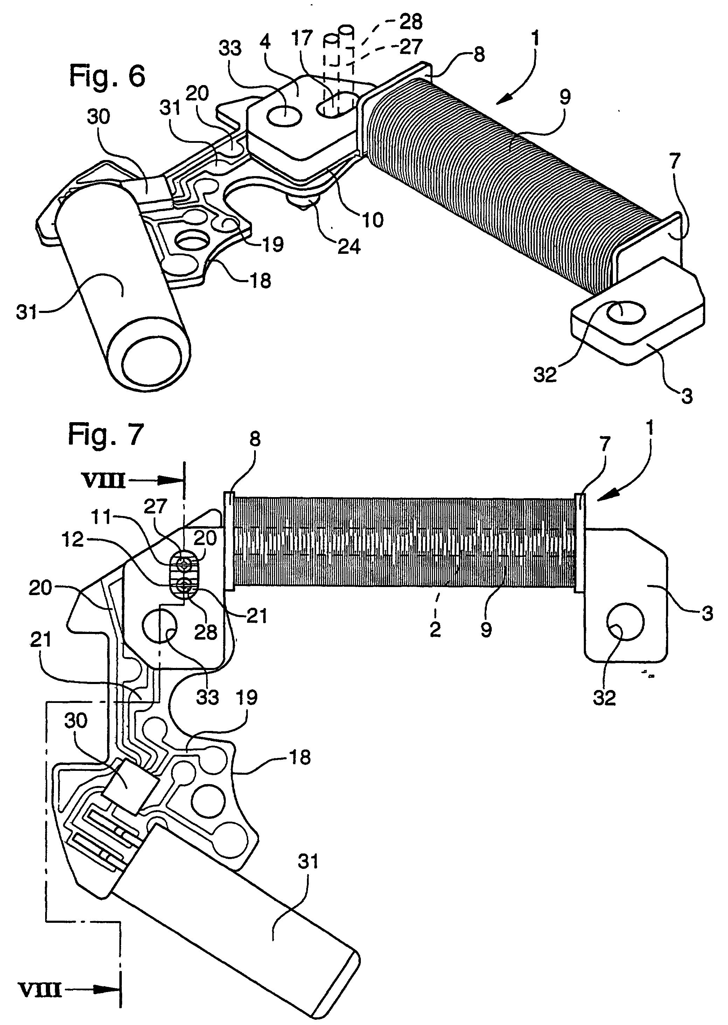

Le circuit électrique se présente sous la forme d'un circuit imprimé 18 comme montré en perspective sur la figure 6 et en plan sur la figure 7. Ce circuit imprimé 18 est muni de pistes conductrices 19. Il est apte à fournir au moteur des impulsions d'avance générées de façon usuelle par un quartz 31 et un circuit intégré 30. Le circuit imprimé 18 est appliqué contre la plaque 10 et, comme le montre bien la figure 7, des pistes conductrices 20 et 21, susceptibles d'alimenter le moteur, font face aux fils de sortie 11 et 12 correspondants de l'enroulement 9 de la bobine 1. Au droit du trou 16, 17 foré à la fois dans la plaque 10 et dans l'oreille 4 les fils de sortie 11, 12 sont soudés aux pistes conductrices 20 et 21.

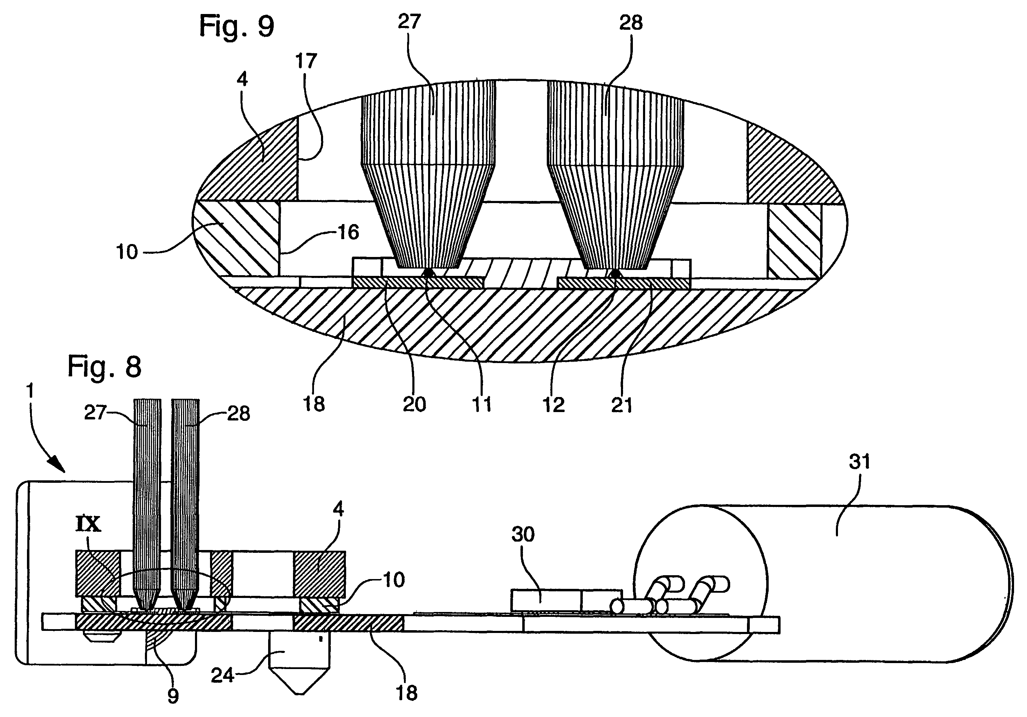

Un procédé montrant comment sont réalisées ces soudures est illustré aux figures 8 et 9. La figure 8 est une coupe selon la ligne VIII-VIII de la figure 7 et la figure 9 est un agrandissement de la zone IX dessinée en figure 8. Quand le circuit imprimé 18 est disposé contre la plaque 10 comme décrit au paragraphe ci-dessus on applique, à travers le trou 17 de l'oreille 4 et le trou 16 de la plaque 10, ces trous étant disposés en enfilade, une goupille 27 sur le fil 11 et une autre goupille 28 sur le fil 12. En exerçant une pression sur ces goupilles et en les chauffant, on soude les fils 11 et 12 sur les pistes 20 et 21, respectivement, par thermocompression. Cette opération ne nécessite aucun dénudage des fils, aucun apport de soudure, et peut être faite sur machine automatique.

La description ci-dessus montre que la réalisation de la bobine 1 et sa connexion au circuit imprimé 18 de commande peut être automatisée à l'extrême avec le minimum de rebuts. Cela contribue bien sûr à diminuer dans de fortes proportions le prix de revient de l'ensemble.

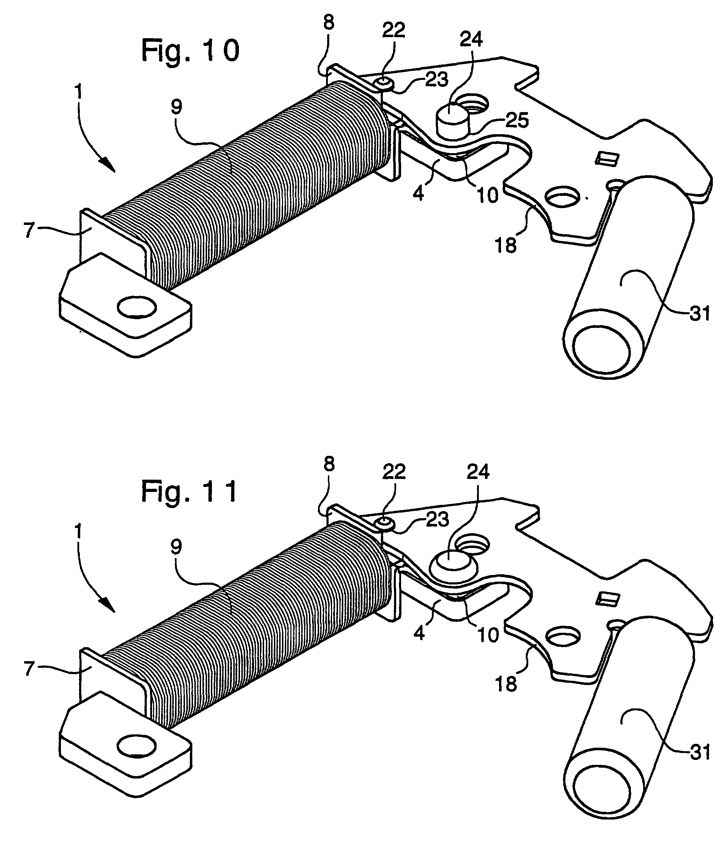

Reste encore à expliquer comment on peut s'y prendre pour fixer le circuit imprimé 18 sur la plaque 10, en précisant que cette fixation a lieu avant le soudage des fils 11 et 12. On se référera pour cela aux figures 2, 3, 10 et 11. Comme on le voit sur les figures 2 et 3, la plaque 10 porte un premier téton 22 formé en moulant la plaque 10 et un second téton 24 moulé de la même façon. Comme on le voit sur la figure 10 (qui montre le circuit imprimé 18 vu de dessous) ce circuit 18 comporte un premier trou 23 traversé par le premier téton 22 et un second trou 25 traversé par le second téton 24 quand le circuit 18 est appliqué sur la plaque 10. Comme on le voit sur la figure 11, la fonction du téton 22 est de guider et d'orienter le circuit 18, alors que la fonction du téton 24 est de fixer ledit circuit 18, cette fixation étant réalisée par chauffage de l'extrémité dudit second téton 24 pour river finalement le circuit imprimé 18 sur la plaque 10.

## Revendications

1. Bobine (1) de moteur actionnant l'affichage d'une pièce d'horlogerie, cette bobine comportant un noyau magnétisable (2) dont chacune des extrémités comprend une oreille (3, 4), un corps de bobine (5) isolant constitué d'un tube (6) entourant le noyau (2) et d'un flasque (7, 8) disposé à chacune des extrémités du tube (6), et un enroulement (9) bobiné sur le corps de bobine (5), **caractérisée par le fait qu'**une plaque (10), faite d'une pièce avec l'un (8) des flasques et arrangée pour venir reposer sur l'une (4) des oreilles du noyau (2), sert de point d'ancrage pour les fils de sortie (11, 12) de l'enroulement (9) par incrustation des zones terminales (13, 14) de chacun de ces fils dans la plaque (10).

2. Bobine selon la revendication 1, **caractérisée par le fait qu'**avant d'aboutir aux zones terminales (13, 14) d'incrustation, les fils de sortie (11, 12) suivent un canal (15) pratiqué dans la plaque (10), un trou (16, 17) disposé perpendiculairement aux fils (11, 12) et aboutissant dans ce canal (15) étant foré à la fois dans la plaque (10) et dans l'oreille (4).

3. Moteur actionnant l'affichage d'une pièce d'horlogerie, comprenant une bobine selon la revendication 2, **caractérisée par le fait qu'**un circuit imprimé (18) muni de pistes conductrices (20, 21) et apte à fournir au moteur des impulsions d'avance est appliqué contre la plaque (10), les pistes conductrices (20, 21) alimentant le moteur faisant face aux fils de sortie (11, 12) correspondants de l'enroulement (9), lesdites pistes étant soudées audits fils au droit du trou (16, 17) foré à la fois dans la plaque (10) et dans l'oreille (4).

4. Moteur selon la revendication 3, **caractérisée par le fait que** la plaque (10) porte un premier téton (22) traversant un premier trou (23) pratiqué dans le circuit imprimé (18) pour guider et orienter ledit circuit et un second téton (24) traversant un second trou (25) dudit circuit pour le fixer sur ladite plaque (10).

5. Bobine selon la revendication 1, **caractérisée par le fait que** le corps de bobine (5) et la plaque (10) sont moulés en une seule pièce.

6. Procédé de contrôle de bienfacture de la bobine (1) selon la revendication 1, **caractérisé par le fait qu'**on applique dans la zone terminale (13, 14) de chacun des fils de sortie (11, 12) une sonde de mesure (26) entaillant la plaque (10) et venant en contact avec le fil (11, 12) pour mesurer la résistance électrique de l'enroulement (9) de la bobine (1).

7. Procédé de connexion des fils de sortie (11, 12) de l'enroulement (9) de la bobine (1) aux pistes conductrices (20, 21) du circuit imprimé (18) dans un moteur selon la revendication 3, **caractérisé par le fait qu'**on applique à travers le trou (16, 17) traversant la plaque (10) et l'oreille (4) une goupille (27, 28) sur chacun des fils de sortie (11, 12) et qu'on soude ledit fil sur ladite piste correspondante par thermocompression.

8. Procédé de fixation du circuit imprimé (18) sur la plaque (10) dans un moteur selon la revendication 4, **caractérisé par le fait qu'**on chauffe l'extrémité du second téton (24) pour river ledit circuit imprimé (18) sur ladite plaque (10).

## Patentansprüche

1. Spule (1) für Motor, der die Anzeige eines Zeitmessgeräts betätigt, wobei diese Spule einen magnetisierbaren Kern (2), wovon jedes Ende einen Ansatz (3, 4) aufweist, einen isolierenden Spulenkörper (5), der aus einem den Kern (2) umgebenden Rohr (6) und aus einem an jedem der Enden des Rohrs (6) angeordneten Flansch (7, 8) gebildet ist, und eine auf den Spulenkörper (5) gewickelte Wicklung (9) umfasst, **dadurch gekennzeichnet, dass** eine Platte (10), die einteilig (8) mit einem der Flansche ausgebildet und so angeordnet ist, dass sie auf einem (4) der Ansätze des Kerns (2) ruht, ais Verankerungspunkt für die Ausgangsdrähte (11, 12) der Wicklung (9) dient, indem Endbereiche (13, 14) jedes dieser Drähte in die Platte (10) eingeprägt sind.

2. Spule nach Anspruch 1, **dadurch gekennzeichnet, dass** die Ausgangsdrähte (11, 12), bevor sie in die Einprägungsendbereiche (13, 14) gelangen, einem in der Platte (10) ausgebildeten Kanal (15) folgen, wobei ein Loch (16, 17), das senkrecht zu den Drähten (11, 12) verläuft und in diesen Kanal (15) mündet, gleichzeitig in die Platte (10) und in den Ansatz (4) gebohrt ist.

3. Motor, der die Anzeige eines Zeitmessgeräts betätigt und eine Spule nach Anspruch 2 umfasst, **dadurch gekennzeichnet, dass** auf die Platte (10) eine gedruckte Schaltung (18) aufgebracht ist, die mit Leiterbahnen (20, 21) versehen ist und dem Motor Vorrückungsimpulse zuführen kann, wobei die Leiterbahnen (20, 21), die den Motor speisen, den entsprechenden Ausgangsdrähten (11, 12) der Wicklung (9) zugewandt sind, wobei die Bahnen mit den Drähten am Ort des Lochs (16, 17), das zugleich in die Platte (10) und in den Ansatz (4) gebohrt ist, verschweiss sind.

4. Motor, der die Anzeige eines Zeitmessgeräts betätigt und eine Spule nach Anspruch 3 umfasst, **dadurch gekennzeichnet, dass** die Platte (10) einen ersten Zapfen (22), der durch ein erstes Loch (23) verläuft, das in der gedruckten Schaltung (18) ausgebildet ist, um die Schaltung zu führen und zu orientieren, und einen zweiten Zapfen (24), der durch ein zweites Loch (25) der Schaltung verläuft, um sie auf der Platte (10) zu befestigen, umfasst.

5. Spule nach Anspruch 1, **dadurch gekennzeichnet, dass** der Spulenkörper (5) und die Platte (10) einteilig gegossen sind.

6. Verfahren zur Qualitätskontrolle der Spule (1) nach Anspruch 1, **dadurch gekennzeichnet, dass** in der Endzone (13, 14) jedes der Ausgangsdrähte (11, 12) eine Messsonde (26) aufgebracht wird, die die Platte (10) einkerbt und mit dem Draht (11, 12) in Kontakt gelangt, um den ohmschen Widerstand der Wicklung (9) der Spule (1) zu messen.

7. Verfahren zum Verbinden der Ausgangsdrähte (11, 12) der Wicklung (9) der Spule (1) mit den Leiterbahnen (20, 21) der gedruckten Schaltung (18) in einem Motor nach Anspruch 3, **dadurch gekennzeichnet, dass** durch das Loch (16, 17), das durch die Platte (10) und den Ansatz (4) verläuft, ein Stift (27, 28) gegen jeden der Ausgangsdrähte (11, 12) gedrückt wird und dass der Draht mit der entsprechenden Bahn durch Thermokompression verschweisst wird.

8. Verfahren zum Befestigen der gedruckten Schaltung (18) auf der Platte (10) in einem Motor nach Anspruch 4, **dadurch gekennzeichnet, dass** das Ende des zweiten Zapfens (24) erhitzt wird, um die gedruckte Schaltung (18) auf die Platte (10) zu nieten.

## Claims

1. Motor coil (1) actuating the display means of a timepiece, said coil including a magnetisable core (2) each of whose ends includes a lug (3, 4), an insulating coil body (5) formed of a tube (6) surrounding the core (2) and a flange (7, 8) disposed at each of the ends of the tube (6), and a winding (9) wound around the body of the coil (5), **characterized in that** a plate (10), made in one piece with one (8) of the flanges and arranged so as to rest on one (4) of the lugs of the core (2) acts as anchoring point for the output wires (11, 12) of the winding (9) by incrustation of the end zones (13, 14) of each of these wires in the plate (10).

2. Coil according to claim 1, **characterized in that** prior to reaching the incrustation end zones (13, 14), the output wires (11, 12) follow a channel (15) made in the plate (10), a hole (16, 17) arranged perpendicular to the wires (11, 12) and ending in said channel (15), being made both in the plate (10) and in the lug (4).

3. Motor activating the display of a timepiece, including a coil according to claim 2, **characterized in that** a printed circuit (18) provided with conductive paths (20, 21) and able to supply the motor with driving pulses is applied against the plate (10), the conductive paths (20, 21) supplying the motor facing the corresponding output wires (11, 12) of the winding (9), said paths being bonded to said wires opposite the hole (16, 17) made both in the plate (10) and in the lug (4).

4. Motor according to claim 3, **characterized in that** the plate (10) carries a first stud (22) passing through a first hole (23) made in the printed circuit (18) to guide and orient said circuit and a second stud (24) passing through a second hole (25) of said circuit to fix it onto said plate (10).

5. Coil according to claim 1, **characterized in that** the coil body (5) and the plate (10) are moulded in a single piece.

6. Method for testing proper manufacture of the coil (1) according to claim 1, **characterized in that** a measuring probe (26) is applied in the end zone (13, 14) of each of the output wires (11, 12), nicking the plate (10) and coming into contact with the wire (11, 12) to measure the electric resistance of the winding (9) of the coil (1).

7. Method for connecting the output wires (11, 12) of the winding (9) of the coil (1) to the conductive paths (20, 21) of the printed circuit (18) in a motor according to claim 3, **characterized in that** a pin (27, 28) is applied through the hole (16, 17) passing through the plate (10) and the lug (4) onto each of the output wires (11, 12) and **in that** said wire is bonded onto said corresponding path by thermocompression.

8. Method for fixing the printed circuit (18) onto the plate (10) in a motor according to claim 4, **characterized in that** the end of the second stud (24) is heated to rivet said printed circuit 818) onto said plate (10).
